# EUROPÄISCHE PATENTSCHRIFT

(11) **EP 3 445 980 B1**
(45) Veröffentlichungstag und Bekanntmachung des Hinweises auf die Patenterteilung: **01.01.2020**
(21) Anmeldenummer: 17713268.5
(22) Anmeldetag: 23.03.2017
(51) Int. Cl.: F16C 11/06, B60G 7/00

(54) **AXIALKUGELGELENK UND LÄNGENEINSTELLBARER ZWEIPUNKTLENKER MIT EINEM SOLCHEN AXIALKUGELGELENK**
AXIAL BALL JOINT AND LENGTH-ADJUSTABLE TWO-POINT LINK WITH SUCH AN AXIAL BALL JOINT
ARTICULATION À ROTULE AXIALE ET BRAS DE SUSPENSION ARTICULÉ EN DEUX POINTS À LONGUEUR RÉGLABLE COMPRENANT UNE TELLE ARTICULATION À ROTULE AXIALE

(30) Priorität: 22.04.2016 DE 102016206863
(43) Veröffentlichungstag der Anmeldung: 27.02.2019
(73) Patentinhaber: ZF Friedrichshafen AG, 88046 Friedrichshafen (DE)
(72) Erfinder: REDDEHASE, Günter, 49448 Brockum (DE); ALTMEPPEN, Janina, 49716 Meppen (DE)
(86) Internationale Anmeldenummer: PCT/EP2017/056975
(87) Internationale Veröffentlichungsnummer: WO 2017/182228

(56) Entgegenhaltungen:
- DE-A1-102014 202 628
- DE-C- 970 805
- FR-A1- 2 693 955
- GB-A- 753 234
- US-A1- 2014 086 667

## Beschreibung

Die Erfindung betrifft ein Axialkugelgelenk und einen längeneinstellbaren Zweipunktlenker mit einem solchen Axialkugelgelenk gemäß den Oberbegriffen der unabhängigen Patentansprüche.

Axialkugelgelenke und längeneinstellbare Zweipunktlenker mit solchen Axialkugelgelenken sind aus dem Stand der Technik bekannt. In der DE 103 48 645 A1 ist ein längeneinstellbarer Zweipunktlenker beschrieben, welcher an einem Ende mit einem Axialkugelgelenk versehen ist. Das Axialkugelgelenk weist ein Gehäuse und einen mit einer Gelenkkugel dreh- und schwenkbeweglich in dem Gehäuse gelagerten Kugelzapfen auf, welcher sich in nicht ausgelenktem Zustand in einer Axialrichtung aus dem Gehäuse heraus erstreckt. Der Kugelzapfen ist mit einem Außengewinde in ein korrespondierendes Innengewinde eines Verbindungsrohres des Zweipunktlenkers eingeschraubt. Der Kugelzapfen weist für eine Längeneinstellung des Zweipunktlenkers ferner Schlüsselflächen zum Ansetzen eines Maulschlüssels auf. Wird der Kugelzapfen gedreht, entfernen sich je nach Drehrichtung das Verbindungsrohr und das Gehäuse des Axialkugelgelenks voneinander oder beide Bauteile nähern sich einander an. Das Gehäuse des Axialkugelgelenks weist einen sich in der Axialrichtung erstreckenden Gewindezapfen mit einem Außengewinde auf, wobei der Gewindezapfen gegenüberliegend zu der Seite angeordnet ist, auf der sich der Kugelzapfen aus dem Gehäuse heraus erstreckt. Der Gewindezapfen dient zur Anbindung des Axialkugelgelenks an einen sich senkrecht zu der Axialrichtung erstreckenden Längsträger. Hierzu ist der Gewindezapfen durch ein sich in der Axialrichtung erstreckendes Aufnahmeloch in dem Längsträger hindurchgeführt und mit einer Gewindemutter in seiner Lage fixiert.

FR 2 693 955 A offenbart ein gattungsgemäßes Axialkugelgelenk.

Aufgabe der Erfindung ist es, ein Axialkugelgelenk mit einer alternativen Anbindungsmöglichkeit bereitzustellen.

Diese Aufgabe wird gemäß der vorliegenden Erfindung gelöst durch ein gattungsgemäßes Axialkugelgelenk, welches zusätzlich die kennzeichnenden Merkmale des Patentanspruchs 1 aufweist.

Bevorzugte Ausführungsformen und Weiterbildungen sind Gegenstand der Unteransprüche und der nachfolgenden Beschreibung.

Die Erfindung sieht demnach ein Axialkugelgelenk vor, insbesondere für einen längeneinstellbaren Zweipunktlenker. Das Axialkugelgelenk weist ein Gehäuse und einen mit einer Gelenkkugel dreh- und schwenkbeweglich in dem Gehäuse gelagerten Kugelzapfen auf, welcher sich in nicht ausgelenktem Zustand in einer Axialrichtung aus dem Gehäuse heraus erstreckt. Erfindungsgemäß weist das Gehäuse einen einstückig mit diesem verbundenen Anschlusszapfen auf, welcher sich zumindest im Wesentlichen senkrecht zu der Axialrichtung erstreckt.

Durch die Erfindung wird ein als Winkelgelenk ausgebildetes Axialkugelgelenk bereitgestellt, wobei unter einem Winkelgelenk im Zusammenhang mit der vorliegenden Erfindung ein Kugelgelenk zu verstehen ist, welches eine erste zapfenartige Anschlussmöglichkeit für ein erstes Bauteil und eine zumindest im Wesentlichen senkrecht hierzu angeordnete zweite zapfenartige Anschlussmöglichkeit für ein zweites Bauteil bietet. Da der Kugelzapfen unter anderem drehbeweglich in dem Gehäuse gelagert ist, kann dieser, beispielsweise über eine Gewindeverbindung, längenveränderbar an ein Anschlussbauteil wie zum Beispiel einen Zweipunktlenker angebunden werden. Bei der Anbindung handelt es sich insbesondere um eine unmittelbare Anbindung ohne zwischengeschaltete Elemente wie beispielsweise eine Gewindehülse. Dadurch wird der Bauteilumfang, also die Anzahl der zu montierenden Bauteile, und damit auch der Montageaufwand gering gehalten und gleichzeitig eine Anbindung geschaffen, die Gewichtsvorteile bietet. Der Anschlusszapfen kann auch leicht gekröpft ausgebildet sein und sich aufgrund dessen nicht exakt senkrecht zu der Axialrichtung erstrecken. Durch das Axialkugelgelenk ist eine Längeneinstellung eines Zweipunktlenkers auch im Einbauzustand im Fahrzeug möglich.

Bei Kugelgelenken wird zwischen Axialkugelgelenken und Radialkugelgelenken unterschieden. Diese Unterscheidung richtet sich nach der jeweiligen Hauptbelastungsrichtung der im Einbauzustand auf die Kugelzapfen der beiden Kugelgelenkarten einwirkenden Kräfte. Als Bezug für eine Definition der beiden Kugelgelenkarten dient die Position des nicht ausgelenkten Kugelzapfens, wobei der Kugelzapfen als nicht ausgelenkt anzusehen ist, wenn dieser aus der nicht ausgelenkten Position in alle möglichen Richtungen um den gleichen Winkelausschlag verschwenkt werden kann. Die nicht ausgelenkte Position wird daher auch als Nullstellung oder neutrale Winkelstellung bezeichnet. Die Hauptbelastungsrichtung eines Axialkugelgelenks liegt in Richtung der Längs-Mittenachse des Kugelzapfens, während die Hauptbelastungsrichtung bei einem Radialkugelgelenk senkrecht zu der Längs-Mittenachse des Kugelzapfens verläuft. Somit unterscheiden sich die beiden Kugelgelenktypen hinsichtlich der auf sie einwirkenden Belastungen und damit auch im Aufbau grundsätzlich voneinander. So besteht bei Axialkugelgelenken eine Hauptanforderung darin, eine Gelenkkugel des Kugelzapfens in einem Gehäuse des Axialkugelgelenks derart zu lagern, dass der Kugelzapfen bei einer Zugbelastung nicht aus dem Gehäuse herausgelöst werden kann. Diese sogenannte Auszugskraft des Axialkugelgelenks ist ein wesentliches Qualitätskriterium eines Axialkugelgelenks. Bei Radialkugelgelenken wird der Kugelzapfen durch Kräfte belastet, die radial zu dessen Längs-Mittenachse auf diesen einwirken. Infolgedessen ist die Auszugskraft des Kugelzapfens bei Radialkugelgelenken geringer als bei Axialkugelgelenken, was sich in der Gehäuseausführung widerspiegelt.

Bevorzugt weist der Anschlusszapfen einen konischen Abschnitt auf. Der konische Abschnitt dient dabei zur Anbindung des Anschlusszapfens an ein Anschlussbauteil des Axialkugelgelenks wie beispielsweise einen Radträger, der auch als Achsschenkel bezeichnet wird, einen Lenkhebel oder einen Lenkstockhebel, wobei das Anschlussbauteil jeweils eine zu dem konischen Abschnitt korrespondierende Kegelaufnahme aufweist. Durch diesen Kegelsitz wird toleranzunabhängig ein selbstzentrierender und spielfreier Sitz des Anschlusszapfens in der Kegelaufnahme des Anschlussbauteils erreicht. Alternativ kann der Anschlusszapfen auch einen zylindrischen Abschnitt aufweisen, der mittels einer Kegelscheibe an die Kegelaufnahme des Anschlussbauteils angebunden ist.

In vorteilhafter Weiterbildung weist der Anschlusszapfen an dessen freien Ende ein Befestigungsgewinde und stirnseitig eine als Innenkontur ausgebildete Mitnahmegeometrie, insbesondere eine Innensechskantgeometrie oder Innensechsrundgeometrie, auf. Über eine von dem Befestigungsgewinde aufgenommene Mutter kann der konische Abschnitt des Anschlusszapfens gegenüber der Kegelaufnahme des Anschlussbauteils verspannt werden, um einen dauerhaft festen Kegelsitz zu gewährleisten und ein Lösen der Kegelverbindung zu vermeiden. Die Mitnahmegeometrie kann beispielsweise als Innensechskantgeometrie oder als Innensechsrundgeometrie ausgebildet sein, wobei die Innensechsrundgeometrie auch als Torx-Antrieb bezeichnet wird. In Verbindung mit einem passenden Werkzeug, beispielsweise einem Innensechskantschlüssel, kann der Anschlusszapfen durch die Mitnahmegeometrie daran gehindert werden, sich während des Anziehens der Mutter mitzudrehen. Auf diese Weise werden Beschädigungen der sich im Bereich des Kegelsitzes berührenden Oberflächen vermieden.

Weiterhin ist es bevorzugt, dass in dem Gehäuse eine Kunststofflagerschale angeordnet ist, welche die Gelenkkugel zu weniger als deren Hälfte anliegend umschließt. Die Kunststofflagerschale ist insbesondere rotationssymmetrisch mit einer sich in der Axialrichtung erstreckenden Rotationsachse ausgebildet. Zumindest im Bereich einer gemeinsamen Kontaktzone mit der Gelenkkugel ist die Kunststofflagerschale massiv ausgeführt, also frei von Hohlräumen, Schlitzen oder sonstigen Unterbrechungen des Bauteilvolumens. Mit einer weniger als der Hälfte umschließenden Anlage der Kunststofflagerschale an der Gelenkkugel ist gemeint, dass sich die Kunststofflagerschale nicht über den sogenannten Äquator der Gelenkkugel hinaus erstreckt. Unter dem Äquator ist dabei die Umfangslinie einer Kreisfläche zu verstehen, die den Durchmesser der Gelenkkugel aufweist und sich zugleich bei nicht ausgelenktem Kugelzapfen senkrecht zu der Axialrichtung erstreckt. Die Kunststofflagerschale ist zur Abstützung von in Axialrichtung wirkenden Druckkräften, die auf das Axialkugelgelenk einwirken können, ausreichend. Bauartbedingt ist das Axialkugelgelenk nicht in größerem Umfang für eine Aufnahme von senkrecht zu der Axialrichtung wirkenden Radialkräften vorgesehen.

Erfindungsgemäß ist das Gehäuse an einem axialen Ende durch eine Axialabstützung verschlossen, welche als Drehteil oder als rotationssymmetrisches Fließpressteil mit in Axialrichtung variierender Dicke ausgebildet ist. Das axiale Ende des Gehäuses ist dabei gegenüberliegend zu dem axialen Ende, an dem sich der Kugelzapfen aus dem Gehäuse heraus erstreckt. Das axiale Ende, an dem sich der Kugelzapfen aus dem Gehäuse heraus erstreckt, wird auch als zapfenseitiges Ende und die Öffnung, aus der sich der Kugelzapfen aus dem Gehäuse heraus erstreckt, als zapfenseitige Öffnung bezeichnet. Die Axialabstützung ist stabil ausgebildet, um die im Betrieb hauptsächlich in Axialrichtung auf das Axialkugelgelenk einwirkenden Kräfte sicher aufnehmen zu können. Bei Radialkugelgelenken findet man an dieser Stelle häufig sogenannte Deckel aus umgeformtem Blechmaterial vor. Diese halten allerdings den bei Axialkugelgelenken in Axialrichtung wirkenden Kräften nicht stand.

Abhängig von der Stückzahl kann die Axialabstützung als Drehteil, insbesondere als Automatendrehteil, oder als rotationssymmetrisches Fließpressteil ausgebildet sein. Vorteilhaft weist die Axialabstützung bereichsweise eine Außenumfangsfläche auf, die einer Zylindermantelfläche entspricht. Diese Zylindermantelfläche liegt insbesondere an einer formkorrespondierenden Innenumfangsfläche des Gehäuses unter Ausbildung einer Presspassung an. Innerhalb des Axialkugelgelenks stützt sich die Kunststofflagerschale in Axialrichtung gegen die Axialabstützung ab. Die in Axialrichtung variierende Dicke der Axialabstützung liegt darin begründet, dass sich ein gemeinsamer Kontaktbereich der Axialabstützung und der Kunststofflagerschale nicht senkrecht zu der Axialrichtung erstreckt, wohingegen sich eine zumindest im Wesentlichen ebene und nach gehäuseaußen gewandte kreisförmige Außenfläche der Axialabstützung senkrecht zu der Axialrichtung erstreckt.

Eine Weiterbildung sieht vor, dass die Axialabstützung und das Gehäuse eine gemeinsame Kontaktfläche aufweisen, welche nach Art einer Kegelstumpfmantelfläche ausgebildet ist. Mit einer gemeinsamen Kontaktfläche ist in diesem Zusammenhang gemeint, dass die Axialabstützung und das Gehäuse jeweils eine formkorrespondierende Kontaktfläche aufweisen, die im Zusammenbauzustand des Axialkugelgelenks aneinander anliegen und die gemeinsame Kontaktfläche bilden. Die gemeinsame Kontaktfläche befindet sich an einem axialen Ende des Gehäuses, welches in Axialrichtung gegenüberliegend zu dem axialen Ende des Gehäuses angeordnet ist, an dem sich der Kugelzapfen aus dem Gehäuse heraus erstreckt. Die Kegelstumpfmantelfläche ist derart ausgerichtet, dass sich deren Rotationsachse in der Axialrichtung erstreckt und das Ende der Kegelstumpfmantelfläche mit dem geringeren Durchmesser nach gehäuseaußen weist. In einem Axialschnitt schließt die Kegelstumpfmantelfläche zu der Axialrichtung einen Winkel von im Wesentlichen 45 Grad ein. Durch Ausbildung der gemeinsamen Kontaktfläche nach Art einer Kegelstumpfmantelfläche ist eine formschlüssige Sicherung gegen ein axiales Herausdrücken der Axialabstützung aus dem Gehäuse gegeben.

Im Zusammenbauzustand liegt eine umlaufende Stauchkante des Gehäuses mit der gehäuseseitigen Kontaktfläche an der Kontaktfläche der Axialabstützung an. Insbesondere ist die Kontaktfläche der Stauchkante vor dem Einsetzen der Axialabstützung in das Gehäuse umlaufend nach Art einer Zylindermantelfläche ausgebildet. Das Anlegen der Stauchkante an die Axialabstützung unter Ausbildung der gemeinsamen Kontaktfläche erfolgt insbesondere durch ein vollumfänglich gleichzeitiges Stauchen der Stauchkante mittels einer sich in Axialrichtung auf das Gehäuse zu bewegenden Stauchglocke. Das Anlegen der Stauchkante an die Axialabstützung wird auch als Schließen des Gehäuses bezeichnet. Die umlaufende Stauchkante des Gehäuses ist stabiler ausgeführt als sogenannte Bördelränder, die von Radialkugelgelenk-Gehäusen bekannt sind und häufig durch ein sogenanntes Rollbördeln um ca. 90 Grad umgelegt werden.

Zudem ist es bevorzugt, wenn das Gehäuse innenliegend eine als Kreisringfläche ausgebildete Anschlagfläche für die Axialabstützung aufweist, wobei sich die Anschlagfläche senkrecht zu der Axialrichtung erstreckt. Durch die Anschlagfläche wird ein Axialanschlag bereitgestellt, der es ermöglicht, die Axialabstützung in Axialrichtung reproduzierbar zu positionieren. Auf diese Weise kann die Kunststofflagerschale wiederholgenau vorgespannt werden. Dadurch ist gewährleistet, dass sich die für ein Verschwenken des Kugelzapfens aus einer Ruhelage erforderliche Kraft, die auch als Losbrechkraft bezeichnet wird, stets innerhalb eines vorgegebenen Toleranzbereichs bewegt. Unter der Losbrechkraft ist in diesem Zusammenhang die Kraft zu verstehen, die benötigt wird, um den Kugelzapfen des Axialkugelgelenks von einem statischen Ruhezustand in einen dynamischen Zustand zu überführen. Das Gehäuse ist insbesondere als geschmiedetes Gehäuse ausgebildet, wobei auch eine gegossene Ausführung möglich ist.

Bevorzugt ist zwischen der Axialabstützung und der Kunststofflagerschale ein in Axialrichtung wirkendes Federelement, insbesondere ein umlaufender Elastomerring, angeordnet. Diese Anordnung ist besonders verschleißarm, weil bei Dreh- und/oder Schwenkbewegungen des Kugelzapfens keine Relativbewegung zwischen dem Federelement und den zu diesem benachbart angeordneten Bauteilen Axialabstützung und Kunststofflagerschale stattfindet. Insbesondere ist das Federelement als ein umlaufender Elastomerring ausgebildet, welcher in eine Ringnut der Axialabstützung eingelassen und somit gegen eine unerwünschte Verlagerung gesichert ist. Würde der Elastomerring unmittelbar an der Gelenkkugel anliegen, wäre mit erhöhtem Verschleiß desselben durch Abrieb zu rechnen. Da die Kunststofflagerschale aufgrund ihrer Werkstoffeigenschaften eine gewisse Nachgiebigkeit aufweist, wird die Federkraft des Federelements über die Kunststofflagerschale auf die Gelenkkugel übertragen. Die Federkraft bewirkt dabei neben einer Vorspannung der Kunststofflagerschale auch einen Verschleißausgleich für den Fall, dass sich die Kunststofflagerschale nach längerer Betriebsdauer abnutzen sollte. Auf diese Weise ist auch nach längerer Lebensdauer eine spielfreie Lagerung der Gelenkkugel gewährleistet. Der Elastomerring trägt dazu bei, dass bei einem Drehen des Kugelzapfens ein Mitdrehen der Kunststofflagerschale unterbunden wird.

Weiterhin ist es bevorzugt, wenn die Gelenkkugel in einem Anlagebereich des Gehäuses unmittelbar an dem Gehäuse anliegt. Auf diese Weise stützt sich die Gelenckugel in dem Anlagebereich direkt an dem Gehäuse ab, was zu einer hohen Belastbarkeit des Kugelzapfens in der entsprechenden Richtung führt. Der Anlagebereich des Gehäuses ist insbesondere als eine Kugelzone mit einer in der Axialrichtung verlaufenden Rotationsachse ausgebildet. In der Axialrichtung ist der Anlagebereich mit Bezug auf die Gelenkkugel im Wesentlichen gegenüberliegend zu dem Bereich angeordnet, in dem die Kunststofflagerschale an der Gelenkkugel anliegt. Durch diese Anordnung kann in Verbindung mit einer relativ hohen Eigensteifigkeit des Gehäuses eine sehr hohe Auszugskraft des Kugelzapfens aus dem Axialkugelgelenk realisiert werden. Der Anlagebereich des Gehäuses erstreckt sich in der Axialrichtung nicht über den Äquator der Gelenkkugel hinaus, weil die Gelenkkugel des Kugelzapfens in diesem Fall nicht montierbar wäre.

Vorteilhaft ist der Anlagebereich oberflächengehärtet, insbesondere induktionsgehärtet, ausgebildet. Durch die Oberflächenhärtung, die auch als Randschichthärtung bezeichnet wird, kann der Verschleiß in dem Kontaktbereich zwischen der Gelenkkugel und dem Anlagebereich des Gehäuses gering gehalten werden.

In bevorzugter Weiterbildung ist in einem Gehäuseinnenraum eine Schließkraftaufnahme nach Art einer säulenförmigen Ausnehmung ausgebildet, wobei die Schließkraftaufnahme zugleich eine Öffnung des Gehäuses bildet. Durch die Schließkraftaufnahme wird die insbesondere in Axialrichtung in das Gehäuse eingeleitete Kraft für das Schließen des Gehäuses, die auch als Schließkraft bezeichnet wird, definiert in einem dafür ausgelegten Bereich des Gehäuses abgestützt. Die Schließkraftaufnahme ist dafür vorgesehen, im Rahmen der Herstellung des Axialkugelgelenks von einer Stauchvorrichtung aufgenommen zu werden. Durch die säulenförmige Ausnehmung wird darüber hinaus die Masse des Gehäuses reduziert. Die Schließkraftaufnahme bildet insbesondere die Öffnung des Gehäuses, aus der sich der Kugelzapfen aus dem Gehäuse heraus erstreckt. Unter einer säulenförmigen Ausnehmung ist in diesem Zusammenhang eine Ausnehmung zu verstehen, die beispielsweise durch ein Eintauchen eines säulenförmigen Werkzeugstempels im Rahmen einer Kaltmassivumformung des Gehäuses in dem Innenraum desselben entsteht. Der säulenförmige Werkzeugstempel weist dabei zumindest über dessen Eintauchtiefe in das Gehäuse eine Querschnittsfläche auf, die in beliebigen Querschnitten parallel zu einer dem Gehäuse zugewandten, ebenen Stirnfläche des Werkzeugstempels jeweils der Stirnfläche entspricht.

Zweckmäßig ist die Schließkraftaufnahme rotationssymmetrisch ausgebildet und weist eine Rotationsachse auf, die sich mit einer Mittelachse des nicht ausgelenkten Kugelzapfens deckt. Aufgrund ihrer rotationssymmetrischen Ausbildung lässt sich die Schließkraftaufnahme einfach in der Stauchvorrichtung positionieren. Insbesondere weist die Schließkraftaufnahme an einem nach gehäuseaußen weisenden Rand eine umlaufende Fase auf, wodurch das Einlegen in die Stauchvorrichtung weiter vereinfacht wird. Da sich die Rotationsachse der Schließkraftaufnahme mit der Mittelachse des nicht ausgelenkten Kugelzapfens deckt, sind während des Schließens des Gehäuses symmetrische Verhältnisse gegeben, wodurch eine gleichmäßige Verteilung der relativ hohen Schließkraft von beispielsweise mehreren hundert Kilonewton in dem Gehäuse gewährleistet ist.

Zudem ist es bevorzugt, dass die Schließkraftaufnahme eine umlaufende Axialanlagefläche aufweist, welche sich senkrecht zu der Axialrichtung erstreckt und in Axialrichtung freiliegt. Die umlaufende Axialanlagefläche nimmt die Schließkraft auf und leitet diese in die Stauchvorrichtung, insbesondere in ein Unterteil der Stauchvorrichtung, ein. Da sich die Rotationsachse der Schließkraftaufnahme mit der Mittelachse des Kugelzapfens deckt und die Axialanlagefläche senkrecht zu der Axialrichtung ausgerichtet ist, löst die Schließkraft in dem Gehäuse eine reine Druckbeanspruchung aus, die frei von Querkrafteinflüssen ist. Insbesondere ist die Axialanlagefläche als eine Kreisringfläche ausgebildet, damit der Kugelzapfen durch die Axialanlagefläche hindurchgeführt werden kann, um sich in dessen weiteren Verlauf aus dem Gehäuse heraus zu erstrecken. Mit der Eigenschaft, dass die Axialanlagefläche in Axialrichtung freiliegt, ist gemeint, dass die Schließkraftaufnahme ausgehend von der Axialanlagefläche in Axialrichtung nach gehäuseaußen hin keine Hinterschneidungen aufweist, wodurch ein ungehinderter Zugang der Stauchvorrichtung zu der Axialanlagefläche möglich ist. Auf diese Weise kann die Stauchvorrichtung, insbesondere eine Aufnahme der Stauchvorrichtung, vollflächig an der Axialanlagefläche anliegen, wodurch während des Schließens des Gehäuses die Flächenpressung in der Axialanlagefläche relativ gering gehalten wird.

Bevorzugt liegt die Axialanlagefläche bei einer Projektion in Axialrichtung teilweise außerhalb der Gelenkkugel. Der größte Durchmesser der Axialanlagefläche ist demnach größer als der Durchmesser der Gelenkkugel. Auf diese Weise wird ein für Axialkugelgelenke relativ hoher Winkelausschlag des Kugelzapfens möglich, wobei der Winkelausschlag einem bei Radialkugelgelenken üblichen maximalen Winkelausschlag angeglichen ist. Somit kann das Axialkugelgelenk in Bezug auf den maximal möglichen Winkelausschlag des Kugelzapfens ein Radialkugelgelenk ersetzen, womit allgemein neue Einsatzmöglichkeiten für Axialkugelgelenke geschaffen werden. Vorteilhaft ist der größte Durchmesser der Axialanlagefläche größer als der größte Durchmesser der Axialabstützung, der mit dem größten Durchmesser der Anschlagfläche identisch ist. Insbesondere ist zugleich in Axialrichtung zwischen der Anschlagfläche und der Axialanlagefläche kein Innendurchmesser des Gehäuses größer als der größte Durchmesser der Axialabstützung. Auf diese Weise wird die Schließkraft in Axialrichtung direkt über einen massiven Wandabschnitt des Gehäuses übertragen, wodurch während des Schließens des Gehäuses unzulässige Verformungen desselben vermieden werden.

Weiterhin ist es bevorzugt, dass die Schließkraftaufnahme eine umlaufende Radialzentrierfläche aufweist, welche als eine Zylindermantelfläche ausgebildet ist, deren Rotationsachse sich in der Axialrichtung erstreckt. Durch die Radialzentrierfläche, die eine Führungsfläche für ein Einlegen des Gehäuses in die Stauchvorrichtung darstellt, kann das Gehäuse in der Stauchvorrichtung lagegenau positioniert und während des Schließvorgangs sicher in dieser Position gehalten werden. Insbesondere ist in eine Außenwandung des Gehäuses eine umlaufende Balgnut zur Aufnahme eines Endes eines Dichtungsbalgs eingelassen, wobei die Balgnut in der Axialrichtung auf gleicher Höhe wie die Radialzentrierfläche, und somit an einem axialen Ende des Gehäuses, angeordnet ist. Eine solche endseitige Anordnung der Balgnut, hat den Vorteil, dass der Dichtungsbalg in Axialrichtung relativ kurz ausgeführt werden kann. Da die Balgnut konstruktionsbedingt einen relativ großen Durchmesser aufweist, kann ein im Durchmesser ebenfalls relativ großer Dichtungsbalg verwendet werden, wodurch wiederum relativ große Winkelausschläge des Kugelzapfens ermöglicht werden.

Vorteilhaft ist der Kugelzapfen mit einem Außengewinde ausgestaltet, dessen Gewindelänge in Axialrichtung größer ist als die Gewindelänge des Befestigungsgewindes des Anschlusszapfens. Die größere, dem Kugelzapfen zugeordnete, Gewindelänge liegt darin begründet, dass es sich bei dem Außengewinde des Kugelzapfens, das insbesondere an dem der Gelenkkugel gegenüberliegenden Ende des Kugelzapfens angeordnet ist, um ein Verstellgewinde zur Längeneinstellung eines Zweipunktlenkers handelt. Die Gewindelänge setzt sich dabei zum einen aus einer Mindesteinschraubtiefe zusammen, mit der das Außengewinde des Kugelzapfens mindestens in ein Anschlussbauteil des Zweipunktlenkers eingeschraubt sein muss, um auftretende Kräfte sicher übertragen zu können. Diese Mindesteinschraubtiefe beträgt größenordnungsmäßig das Eineinhalbfache des Außendurchmessers des Außengewindes. Zum anderen setzt sich die Gewindelänge neben der Mindesteinschraubtiefe aus dem Verstellbereich des Zweipunktlenkers zusammen. Die Summe dieser beiden Teilgewindelängen ergibt die Gewindelänge des Außengewindes des Kugelzapfens, welches in Axialrichtung bevorzugt über mehr als ein Drittel und besonders bevorzugt über die Hälfte der Längserstreckung des Kugelzapfens ausgebildet ist.

Weiterhin ist es vorteilhaft, wenn der Kugelzapfen an dessen Außenumfang eine Mitnahmegeometrie aufweist, die insbesondere durch zumindest zwei parallel beabstandete Schlüsselflächen gebildet ist. Durch die Mitnahmegeometrie wird eine Angriffsmöglichkeit für ein Verstellwerkzeug, beispielsweise einen Maulschlüssel, bereitgestellt, um eine Längeneinstellung des Zweipunktlenkers vornehmen zu können. Alternativ kann der Kugelzapfen auch eine höhere, gerade Anzahl von Schlüsselflächen aufweisen, die gleichmäßig auf dem Umfang des Kugelzapfens verteilt sind. Die Schlüsselflächen sind in Axialrichtung zwischen der Gelenkkugel und dem Außengewinde des Kugelzapfens angeordnet.

Die Erfindung bezieht sich weiterhin auf einen längeneinstellbaren Zweipunktlenker, insbesondere für ein Nutzfahrzeug. Der Zweipunktlenker weist zwei Winkelgelenke auf, die über ein Verbindungselement, insbesondere ein Verbindungsrohr, miteinander verbunden sind, wobei ein Winkelgelenk als ein Axialkugelgelenk wie zuvor beschrieben ausgebildet sowie längeneinstellbar an das Verbindungselement angebunden ist und das andere Winkelgelenk als ein Radialkugelgelenk ausgebildet sowie starr an das Verbindungselement angebunden ist. Das Verbindungselement kann über dessen Längserstreckung gerade oder gekrümmt ausgebildet sein und weist an dessen dem Kugelzapfen zugewandten Ende ein Innengewinde auf, das korrespondierend zu dem Außengewinde des Kugelzapfens ausgebildet ist. Die Längeneinstellung des Zweipunktlenkers erfolgt bei direkt in das Innengewinde des Verbindungselements eingeschraubtem Kugelzapfen durch Drehen desselben um dessen Mittelachse. Auf eine zwischen dem Außengewinde des Kugelzapfens und dem endseitigen Innengewinde des Verbindungselements angeordnete Gewindehülse, welche von Zweipunktlenkern mit zwei Radialgelenken bekannt ist, kann verzichtet werden, weil der Kugelzapfen des Axialkugelgelenks in dem Gehäuse drehbar gelagert ist. Neben dieser Bauteileinsparung kann auch das Verbindungselement zusätzlich mit einem geringeren Durchmesser und somit leichter ausgeführt werden, weil von dem Verbindungselement keine Gewindehülse aufgenommen werden muss. Zur Längeneinstellung des Zweipunktlenkers wird beispielsweise ein Maulschlüssel auf die parallel beabstandeten Schlüsselflächen aufgesetzt.

Ist die gewünschte Längeneinstellposition erreicht, kann diese mittels einer Klemmschelle, die das dem Kugelzapfen zugewandte Ende des Verbindungselements umgreift, fixiert werden. Damit die senkrecht zu der Axialrichtung, also radial wirkende Klemmkraft auf den Kugelzapfen übertragen werden kann, ist das Ende des Verbindungselements längsgeschlitzt ausgebildet. Die Fixierung der gewünschten Längeneinstellposition kann alternativ auch über eine Klemmmutter erfolgen, die auf das Außengewinde des Kugelzapfens aufgeschraubt ist und den Kugelzapfen gegen das Verbindungselement, insbesondere gegen das Verbindungsrohr, verspannt. Unter einer starren Anbindung ist im Zusammenhang mit der vorliegenden Erfindung eine Anbindung zwischen zwei Teilen zu verstehen, die zwar prinzipiell, beispielsweise durch Zerstören einer formschlüssigen oder einer stoffschlüssigen Verbindung, getrennt werden können, jedoch bei bestimmungsgemäßer Verwendung nicht relativ zueinander bewegbar sind. Die starre Anbindung ist insbesondere als eine Einschlagverbindung und besonders bevorzugt als eine form- und zugleich kraftschlüssige Warmeinschlagverbindung ausgebildet.

Zur Herstellung der Warmeinschlagverbindung wird ein mit teilweise umlaufenden Rillen versehener Schaft des Radialkugelgelenks, der einstückig mit einem Gehäuse des Radialkugelgelenks ausgebildet ist, in eine endseitige Öffnung des Verbindungselements eingeschoben. Diese Öffnung ist an einem Ende des Verbindungsrohres angeordnet, das gegenüberliegend zu dem den Kugelzapfen aufnehmenden Ende des Verbindungsrohres angeordnet ist. Das zuvor erwärmte Ende wird nach dem Einschieben des Schaftes in einem Gesenk zusammengedrückt, wobei sich eine Wandung des erwärmten Endes an die teilweise umlaufenden Rillen anlegt. Nach einem Erkalten des zuvor erwärmten Endes liegt zwischen dem Radialkugelgelenk und dem Verbindungselement eine starre Verbindung vor.

Bevorzugt ist der Zweipunktlenker als Lenkstange, Spurstange, Stabilisator-Verbindungsstange, Bediengestänge oder Panhardstab ausgebildet.

Im Folgenden wird die Erfindung anhand lediglich ein Ausführungsbeispiel darstellender Zeichnungen näher erläutert, wobei sich gleiche Bezugszeichen auf gleiche Bauteile oder Elemente beziehen. Dabei zeigt:
- Fig. 1: in einer zweidimensionalen Darstellung eine Lenkstange eines Nutzfahrzeugs gemäß dem Stand der Technik;
- Fig. 2: in einer perspektivischen Schnittdarstellung ein Axialkugelgelenk gemäß der Erfindung;
- Fig. 3: in einer Schnittdarstellung einen Teil des Axialkugelgelenks aus Fig. 2;
- Fig. 4: in einer perspektivischen Darstellung das Axialkugelgelenk aus Fig. 2 ergänzt um eine Schutzkappe;
- Fig. 5: in einer Schnittdarstellung einen Teil des Axialkugelgelenks aus Fig. 4;
- Fig. 6: in einer perspektivischen Darstellung das Axialkugelgelenk aus Fig. 4 mit aufgeklappter Schutzkappe;
- Fig. 7: in einer teilweise geschnittenen Darstellung das Axialkugelgelenk aus Fig. 2 in einem Einbauzustand und
- Fig. 8: in einer teilweise geschnittenen Zusammenbaudarstellung einen Zweipunktlenker gemäß der Erfindung.

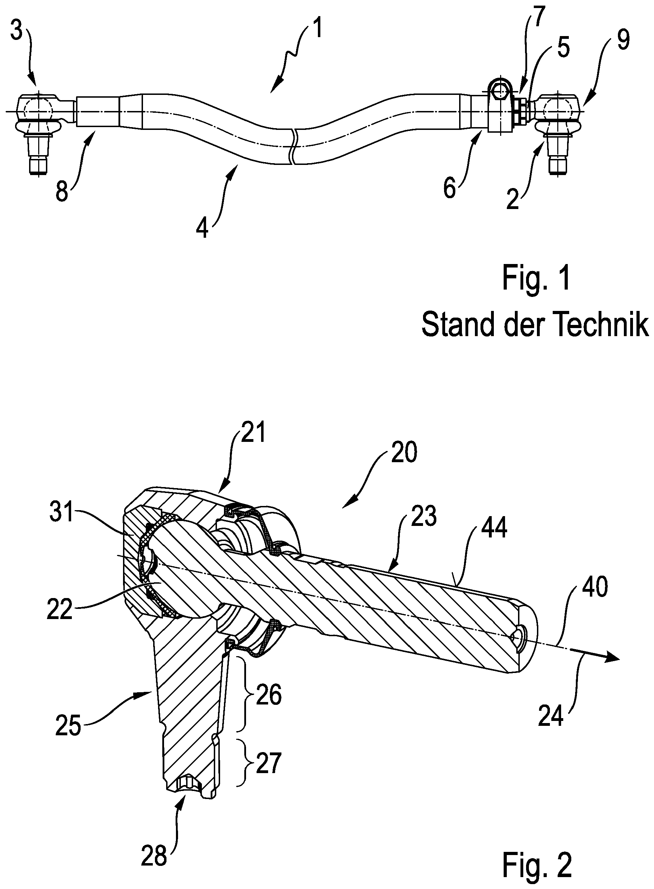

Fig. 1 zeigt einen als Lenkstange 1 ausgebildeten Zweipunktlenker mit zwei jeweils endseitig angeordneten Winkelgelenken, die als Radialkugelgelenke 2, 3 ausgebildet sind. Ein erstes Radialkugelgelenk 2 ist längeneinstellbar an ein als Verbindungsrohr 4 ausgebildetes Verbindungselement angebunden. Das erste Radialkugelgelenk 2 weist einen einstückig mit einem Gehäuse 9 desselben ausgebildeten Schaft 5 auf, welcher mit einem Außengewinde versehen ist. Das Außengewinde ist radial beabstandet zu einem das Außengewinde teilweise überdeckenden Innengewinde eines ersten Endes 6 des Verbindungsrohres 4 angeordnet. Der Abstand zwischen dem Außengewinde und dem Innengewinde ist durch eine Gewindehülse 7 überbrückt, die den Schaft 5 indirekt mit dem ersten Ende 6 des Verbindungsrohres 4 verbindet. Um eine Längeneinstellung der Lenkstange 1 in einem Einbauzustand, beispielsweise in einem Nutzfahrzeug, vorzunehmen, muss die Gewindehülse 7 gedreht werden. Ein zweites Radialkugelgelenk 3 ist starr mit einem zweiten Ende 8 des Verbindungsrohres 4 verbunden.

In Fig. 2 ist ein Axialkugelgelenk 20 für einen längeneinstellbaren Zweipunktlenker dargestellt, wobei das Axialkugelgelenk 20 ein Gehäuse 21 und einen mit einer Gelenkkugel 22 dreh- und schwenkbeweglich in dem Gehäuse 21 gelagerten Kugelzapfen 23 aufweist. Der in nicht ausgelenktem Zustand dargestellte Kugelzapfen 23 erstreckt sich in einer Axialrichtung 24 aus dem Gehäuse 21 heraus, wobei das Gehäuse 21 einen einstückig mit diesem verbundenen Anschlusszapfen 25 aufweist, welcher sich senkrecht zu der Axialrichtung 24 erstreckt. Der Anschlusszapfen 25 weist einen konischen Abschnitt 26 zur Anbindung des Anschlusszapfens 25 an einen Radträger 55 auf. Weiterhin weist der Anschlusszapfen 25 an dessen freien Ende ein Befestigungsgewinde 27 und stirnseitig eine als Innenkontur ausgebildete Mitnahmegeometrie 28 auf, wobei die Mitnahmegeometrie als Innensechskantgeometrie 28 ausgebildet ist.

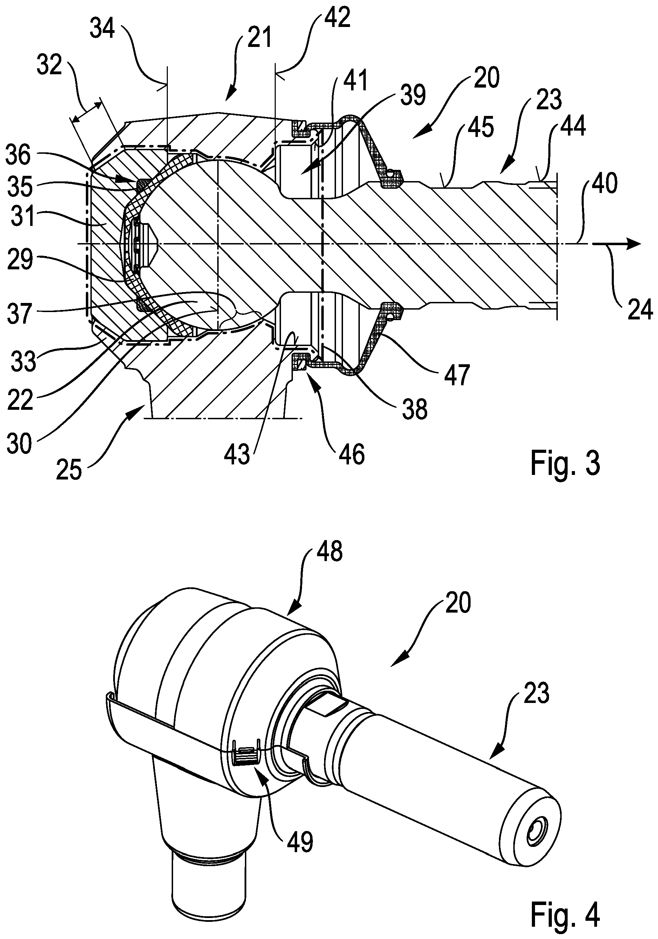

Wie aus Fig. 3 hervorgeht, ist in dem Gehäuse 21 eine Kunststofflagerschale 29 angeordnet, welche die Gelenkkugel 22 zu weniger als deren Hälfte anliegend umschließt. Die Kunststofflagerschale 29 ist rotationssymmetrisch mit einer sich in der Axialrichtung 24 erstreckenden Rotationsachse ausgeführt und erstreckt sich nicht über den sogenannten Äquator 30 der Gelenkkugel 22 hinaus. Im Bereich einer gemeinsamen Kontaktzone mit der Gelenkkugel 22 ist die Kunststofflagerschale 29 massiv ausgebildet. An einem axialen Ende ist das Gehäuse 21 durch eine Axialabstützung 31 verschlossen, wobei die Axialabstützung 31 als Drehteil mit in Axialrichtung 24 variierender Dicke ausgebildet ist. Das axiale Ende ist dabei gegenüberliegend zu dem axialen Ende, an dem sich der Kugelzapfen 23 aus dem Gehäuse 21 heraus erstreckt. Die Axialabstützung 31 und das Gehäuse 21 weisen eine gemeinsame Kontaktfläche 32 auf, die nach Art einer Kegelstumpfmantelfläche ausgebildet ist. Die Kontaktfläche 32 befindet sich an einem axialen Ende des Gehäuses 21, das gegenüberliegend zu dem axialen Ende des Gehäuses 21 angeordnet ist, an dem sich der Kugelzapfen 23 aus dem Gehäuse 21 heraus erstreckt. Die Kegelstumpfmantelfläche ist derart ausgerichtet, dass sich deren Rotationsachse in der Axialrichtung 24 erstreckt und das Ende der Kegelstumpfmantelfläche mit dem geringeren Durchmesser nach gehäuseaußen weist. In dem Axialschnitt gemäß Fig. 3 schließt die Kegelstumpfmantelfläche zu der Axialrichtung 24 einen Winkel von etwa 45 Grad ein.

In der gemeinsamen Kontaktfläche 32 liegen eine dem Gehäuse 21 zugeordnete Kontaktfläche und eine formkorrespondierenden Kontaktfläche der Axialabstützung 31 aneinander an. In dem in Fig. 3 dargestellten Zusammenbauzustand liegt eine umlaufende Stauchkante 33 des Gehäuses 21 im Bereich der gemeinsamen Kontaktfläche 32 an der Axialabstützung 31 an. Vor einem Einpressen der Axialabstützung 31 in das Gehäuse 21 ist die Kontaktfläche der umlaufenden Stauchkante 33 umlaufend nach Art einer Zylindermantelfläche ausgebildet. Das Anlegen der umlaufenden Stauchkante 33 an die Axialabstützung 31 unter Ausbildung der gemeinsamen Kontaktfläche 32 erfolgt durch ein vollumfänglich gleichzeitiges Stauchen der Stauchkante 33 mittels einer sich in Axialrichtung 24 auf das Gehäuse 21 zu bewegenden Stauchglocke. Das Gehäuse 21 weist innenliegend eine als Kreisringfläche ausgebildete Anschlagfläche 34 für die Axialabstützung 31 auf, wobei sich die Anschlagfläche 34 senkrecht zu der Axialrichtung 24 erstreckt. Zwischen der Axialabstützung 31 und der Kunststofflagerschale 29 ist ein in Axialrichtung 24 wirkendes Federelement angeordnet, welches als ein umlaufender Elastomerring 35 ausgebildet ist. Der Elastomerring 35 ist in eine Ringnut 36 der Axialabstützung 31 eingelassen und somit gegen eine unerwünschte Verlagerung gesichert.

Die Gelenkkugel 22 liegt in einem Anlagebereich 37 des Gehäuses 21 unmittelbar an dem Gehäuse 21 an. Auf diese Weise stützt sich die Gelenkkugel 22 in dem Anlagebereich 37 direkt an dem Gehäuse 21 ab, was zu einer hohen Belastbarkeit des Kugelzapfens 23 in der Richtung führt, in der sich der Kugelzapfen 23 aus dem Gehäuse 21 heraus erstreckt. Der Anlagebereich 37 des Gehäuses 21 ist als eine Kugelzone mit einer in der Axialrichtung 24 verlaufenden Rotationsachse ausgebildet. In der Axialrichtung 24 ist der Anlagebereich 37 mit Bezug auf die Gelenkkugel 21 gegenüberliegend zu dem Bereich angeordnet, in dem die Kunststofflagerschale 29 an der Gelenkkugel 22 anliegt. Der Anlagebereich 37 des Gehäuses 21 erstreckt sich in der Axialrichtung 24 nicht über den Äquator 30 der Gelenkkugel 22 hinaus, weil die Gelenkkugel 22 des Kugelzapfens 23 in diesem Fall nicht montierbar wäre. Eine Randschicht des Anlagebereichs 37 ist oberflächengehärtet, wobei die Oberflächenhärtung als Induktionshärtung ausgebildet ist.

In einem Gehäuseinnenraum 38 ist eine Schließkraftaufnahme 39 nach Art einer säulenförmigen Ausnehmung ausgebildet, wobei die Schließkraftaufnahme 39 zugleich eine Öffnung des Gehäuses 21 bildet. Die säulenförmige Ausnehmung ist dabei zylinderförmig ausgebildet. Der Gehäuseinnenraum 38 ist in Fig. 3 von einer Strich-Punkt-Linie umschlossen dargestellt, wobei die Strich-Punkt-Linie der Übersichtlichkeit halber nicht deckungsgleich mit dem den Gehäuseinnenraum 38 begrenzenden Konturverlauf ist. Die Schließkraftaufnahme 39 ist rotationssymmetrisch ausgebildet und weist eine Rotationsachse auf, die sich mit einer Mittelachse 40 des nicht ausgelenkten Kugelzapfens 23 deckt. An einem nach gehäuseaußen weisenden Rand weist die Schließkraftaufnahme 39 eine umlaufende Fase 41 auf, wodurch das Einlegen in eine Stauchvorrichtung erleichtert wird. Die Schließkraftaufnahme 39 bildet die Öffnung des Gehäuses 21, aus der sich der Kugelzapfen 23 aus dem Gehäuse 21 heraus erstreckt. Daneben weist das Gehäuse 21 eine zweite Öffnung auf, die durch die Axialabstützung 31 verschlossen ist.

Die Schließkraftaufnahme kann alternativ auch nach Art eines Sacklochs ausgebildet sein, welches in Axialrichtung gegenüberliegend zu der zapfenseitigen Öffnung angeordnet und lediglich von gehäuseaußen zugänglich ist. Unter einem Sackloch wird in diesem Zusammenhang eine Ausnehmung nach Art einer muldenförmigen Vertiefung verstanden, die eine bestimmte Tiefe aufweist. Bei dieser Ausgestaltung wird die Gelenkkugel des Kugelzapfens im Rahmen der Montage des Axialkugelgelenks durch die zapfenseitige Öffnung, die nun den einzigen Zugang zu dem Gehäuseinnenraum darstellt, in das Gehäuse eingeführt. Anschließend wird die zapfenseitige Öffnung, vorzugsweise durch Umformung, im Querschnitt reduziert, um danach ein Ausziehen der Gelenkkugel aus dem Gehäuse zu verhindern.

Die Schließkraftaufnahme 39 weist eine umlaufende Axialanlagefläche 42 auf, welche sich senkrecht zu der Axialrichtung 24 erstreckt und in Axialrichtung 24 freiliegt, wobei die Axialanlagefläche 42 als eine Kreisringfläche ausgebildet ist. Bei einer Projektion in Axialrichtung 24 liegt die Axialanlagefläche 42 teilweise außerhalb der Gelenkkugel 22. Der größte Durchmesser der Axialanlagefläche 42 ist größer als der größte Durchmesser der Axialabstützung 31, der mit dem größten Durchmesser der Anschlagfläche 34 identisch ist. Zugleich ist in Axialrichtung 24 zwischen der Anschlagfläche 34 und der Axialanlagefläche 42 kein Innendurchmesser des Gehäuses 21 größer als der größte Durchmesser der Axialabstützung 31. Weiterhin weist die Schließkraftaufnahme 39 eine umlaufende Radialzentrierfläche 43 auf, welche an die Axialanschlagfläche 42 grenzt und als eine sich in der Axialrichtung 24 erstreckende Zylindermantelfläche ausgebildet ist.

In der Axialrichtung 24 auf gleicher Höhe wie die Radialzentrierfläche 43 ist an einem axialen Ende des Gehäuses 21 in eine Außenwandung desselben eine umlaufende Balgnut 46 zur Aufnahme eines ebenfalls umlaufenden Anschlussbereichs eines Dichtungsbalgs 47 eingelassen. Durch die gehäuseendseitige Anordnung der Balgnut 46 kann der Dichtungsbalg 47 in Axialrichtung 24 relativ kurz ausgeführt werden. Der Kugelzapfen 23 ist mit einem Außengewinde 44 ausgestaltet, dessen Gewindelänge in Axialrichtung 24 größer ist als die Gewindelänge des Befestigungsgewindes 27 des Anschlusszapfens 25. Weiterhin weist der Kugelzapfen 23 an dessen Außenumfang eine aus zwei parallel beabstandeten Schlüsselflächen 45 gebildete Mitnahmegeometrie auf.

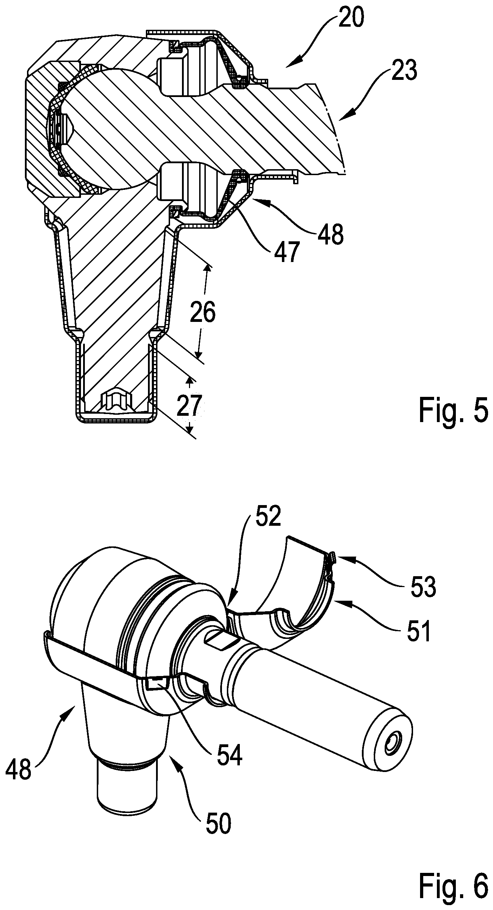

Fig. 4 zeigt das Axialkugelgelenk 20 mit dem Kugelzapfen 23, wobei unter anderem der Anschlusszapfen 25 und der Dichtungsbalg 47 durch eine Schutzkappe 48 abgedeckt sind. Die Schutzkappe 48 ist durch einen Schnappverschluss 49 verschließbar, wobei unter einem Schnappverschluss 49 im Sinne der Erfindung ein Verschluss zu verstehen ist, bei dem ein aus einer Ursprungslage heraus bewegtes Teil des Verschlusses selbststätig zumindest teilweise in Richtung der Ursprungslage zurückspringt und dadurch das Verschließen erfolgt. Wie aus Fig. 5 hervorgeht, schützt die Schutzkappe 48 den konischen Abschnitt 26 und das Befestigungsgewinde 27 des Anschlusszapfens 25 sowie den Dichtungsbalg 47 während des Transports vor Beschädigungen durch mechanische Einwirkung und Umwelteinflüsse. Die Schutzkappe 48 umgreift den Kugelzapfen 23 in dessen nicht ausgelenkter Position und zugleich den Anschlusszapfen 25, wodurch der Kugelzapfen 23 relativ zu dem Anschlusszapfen 25 fixiert ist. Auf diese Weise wird ein Transport des Axialkugelgelenks 20 mit nicht ausgelenktem Kugelzapfen 23 bis zum Einbauort, beispielsweise einem Fahrwerk eines Nutzfahrzeugs, gewährleistet.

Fig. 6 ist zu entnehmen, dass die Schutzkappe 48 einteilig im Sinne von einstückig ausgebildet ist, wobei ein Unterteil 50 und ein Oberteil 51 der Schutzkappe 48 über ein Filmscharnier 52 gelenkig miteinander verbunden sind. Im geschlossenen Zustand der Schutzkappe 48 rastet ein einstückig mit dem Oberteil 51 ausgebildeter Clip 53 in eine einstückig mit dem Unterteil 50 ausgebildete Einrastaufnahme 54 ein. Während des Schließens der Schutzkappe 48 wird der Clip 53 beim Überstreichen der Einrastaufnahme 54 zunächst aus dessen Ursprungslage heraus bewegt und springt bei Erreichen der Schließposition selbststätig in dessen Ursprungslage zurück. Der Clip 53 und die Einrastaufnahme 54 bilden zusammen den Schnappverschluss 49.

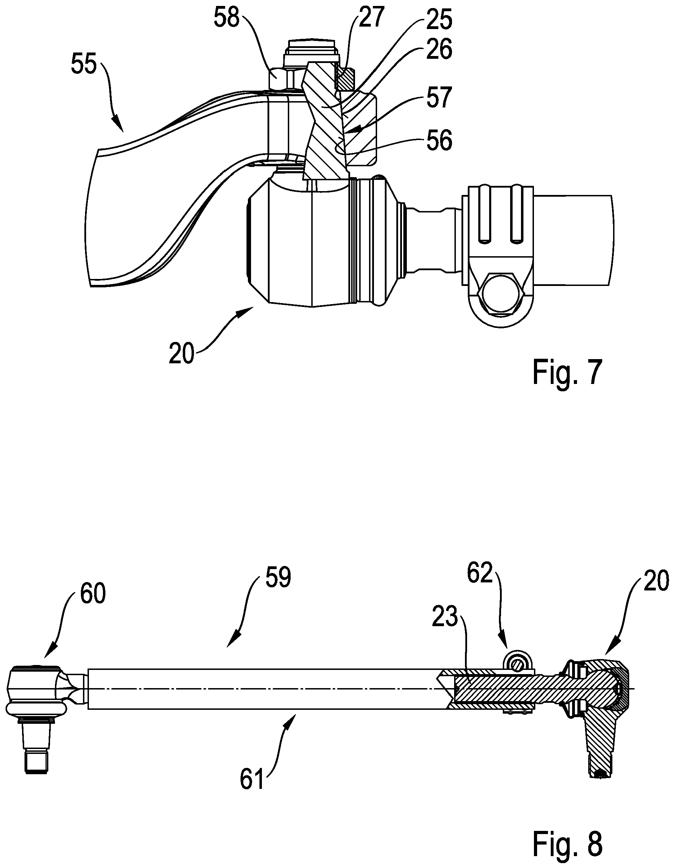

Fig. 7 zeigt ein als Radträger 55 ausgebildetes Anschlussbauteil, welches an den Anschlusszapfen 25 des Axialkugelgelenks 20 angebunden ist. Der Radträger 55 weist hierzu eine Kegelaufnahme 56 auf, die formkorrespondierend zu dem konischen Abschnitt 26 des Anschlusszapfens 25 ausgebildet ist. Durch die Kegelaufnahme 56 und den konischen Abschnitt 26 wird ein Kegelsitz 57 gebildet, der selbstzentrierend ist und einen spielfreien Sitz des Anschlusszapfens 25 in der Kegelaufnahme 56 des Radträgers 55 gewährleistet. Über eine von dem Befestigungsgewinde 27 des Anschlusszapfens 25 aufgenommene Mutter 58 wird der konische Abschnitt 26 des Anschlusszapfens 25 gegenüber der Kegelaufnahme 56 des Radträgers 55 verspannt, um einen dauerhaft festen Sitz zu gewährleisten und ein Lösen der Kegelverbindung zu verhindern.

Fig. 8 zeigt einen längeneinstellbaren Zweipunktlenker, welcher als längeneinstellbare Spurstange 59 für ein Nutzfahrzeug ausgebildet ist. Die längeneinstellbare Spurstange 59 weist zwei Winkelgelenke 20, 60 auf, die über ein als Verbindungsrohr 61 ausgebildetes Verbindungselement miteinander verbunden sind, wobei das Axialkugelgelenk 20 eines der beiden Winkelkugelgelenke bildet. Das Axialkugelgelenk 20 ist längeneinstellbar an das über dessen Längserstreckung gerade ausgebildete Verbindungsrohr 61 angebunden. Das andere Winkelgelenk ist als ein Radialkugelgelenk 60 ausgebildet und starr durch eine form- und zugleich kraftschlüssige Warmeinschlagverbindung an das Verbindungselement 61 angebunden. Das Verbindungsrohr 61 weist an dessen dem Kugelzapfen 23 zugewandten Ende ein Innengewinde auf, das korrespondierend zu dem Außengewinde 44 des Kugelzapfens 23 ausgebildet ist.

Die Längeneinstellung der Spurstange 59 erfolgt bei direkt in das Innengewinde des Verbindungsrohres 61 eingeschraubtem Kugelzapfen 23. Hierzu wird ein Maulschlüssel auf die parallel beabstandeten Schlüsselflächen 45 aufgesetzt und der Kugelzapfen 23 um dessen Mittelachse 40 gedreht. Ist die gewünschte Längeneinstellposition erreicht, kann diese mittels einer Klemmschelle 62, die das dem Kugelzapfen 23 zugewandte Ende des Verbindungsrohres 61 umgreift, fixiert werden. Damit die in Radialrichtung wirkende Klemmkraft auf den Kugelzapfen 23 übertragen werden kann, weist das Verbindungsrohr 61 an dessen Ende einen eine Wandung des Verbindungsrohres 61 durchsetzenden Längsschlitz auf.

### Bezugszeichen

- 1: Lenkstange
- 2: erstes Radialkugelgelenk
- 3: zweites Radialkugelgelenk
- 4: Verbindungselement, Verbindungsrohr
- 5: Schaft
- 6: erstes Ende des Verbindungsrohres
- 7: Gewindehülse
- 8: zweites Ende des Verbindungsrohres
- 9: Gehäuse

- 20: Axialkugelgelenk, Winkelgelenk
- 21: Gehäuse
- 22: Gelenkkugel
- 23: Kugelzapfen
- 24: Axialrichtung
- 25: Anschlusszapfen
- 26: konischer Abschnitt
- 27: Befestigungsgewinde
- 28: Mitnahmegeometrie, Innensechskantgeometrie
- 29: Kunststofflagerschale
- 30: Äquator der Gelenkkugel
- 31: Axialabstützung
- 32: gemeinsame Kontaktfläche
- 33: umlaufende Stauchkante
- 34: Anschlagfläche
- 35: Federelement, Elastomerring
- 36: Ringnut
- 37: Anlagebereich
- 38: Gehäuseinnenraum
- 39: Schließkraftaufnahme
- 40: Mittelachse
- 41: Fase
- 42: Axialanlagefläche
- 43: Radialzentrierfläche
- 44: Außengewinde des Kugelzapfens
- 45: Mitnahmegeometrie, Schlüsselfläche
- 46: Balgnut
- 47: Dichtungsbalg
- 48: Schutzkappe
- 49: Schnappverschluss
- 50: Unterteil der Schutzkappe
- 51: Oberteil der Schutzkappe
- 52: Filmscharnier
- 53: Clip
- 54: Einrastaufnahme
- 55: Anschlussbauteil, Radträger
- 56: Kegelaufnahme
- 57: Kegelsitz
- 58: Mutter
- 59: längeneinstellbarer Zweipunktlenker, längeneinstellbare Spurstange
- 60: Winkelgelenk, Radialkugelgelenk
- 61: Verbindungselement, Verbindungsrohr
- 62: Klemmschelle

## Patentansprüche

1. Axialkugelgelenk (20) für einen längeneinstellbaren Zweipunktlenker (59), das Axialkugelgelenk (20) aufweisend ein Gehäuse (21) und einen mit einer Gelenkkugel (22) dreh- und schwenkbeweglich in dem Gehäuse (21) gelagerten Kugelzapfen (23), welcher sich in nicht ausgelenktem Zustand in einer Axialrichtung (24) aus dem Gehäuse (21) heraus erstreckt, wobei der Kugelzapfen (23) unter anderem drehbeweglich in dem Gehäuse (21) gelagert ist und über eine Gewindeverbindung längenveränderbar an ein Anschlussbauteil angebunden werden kann, wobei der Kugelzapfen (23) an dessen Außenumfang eine Mitnahmegeometrie (45) aufweist und wobei das Gehäuse (21) einen einstückig mit diesem verbundenen Anschlusszapfen (25) aufweist, welcher sich zumindest im Wesentlichen senkrecht zu der Axialrichtung (24) erstreckt, **dadurch gekennzeichnet, dass** das Gehäuse (21) an einem axialen Ende durch eine Axialabstützung (31) verschlossen ist, welche als Drehteil oder als rotationssymmetrisches Fließpressteil mit in Axialrichtung (24) variierender Dicke ausgebildet ist.

2. Axialkugelgelenk (20) nach Anspruch 1, **dadurch gekennzeichnet, dass** der Anschlusszapfen (25) einen konischen Abschnitt (26) aufweist.

3. Axialkugelgelenk (20) nach Anspruch 1 oder 2, **dadurch gekennzeichnet, dass** der Anschlusszapfen (25) an dessen freien Ende ein Befestigungsgewinde (27) und stirnseitig eine als Innenkontur ausgebildete Mitnahmegeometrie, insbesondere eine Innensechskantgeometrie (28) oder Innensechsrundgeometrie, aufweist.

4. Axialkugelgelenk (20) nach einem der vorhergehenden Ansprüche, **dadurch gekennzeichnet, dass** in dem Gehäuse (21) eine Kunststofflagerschale (29) angeordnet ist, welche die Gelenkkugel (22) zu weniger als deren Hälfte anliegend umschließt.

5. Axialkugelgelenk (20) nach einem der vorhergehenden Ansprüche, **dadurch gekennzeichnet, dass** die Axialabstützung (31) und das Gehäuse (21) eine gemeinsame Kontaktfläche (32) aufweisen, welche nach Art einer Kegelstumpfmantelfläche ausgebildet ist.

6. Axialkugelgelenk (20) nach einem der vorhergehenden Ansprüche, **dadurch gekennzeichnet, dass** das Gehäuse (21) innenliegend eine als Kreisringfläche ausgebildete Anschlagfläche (34) für die Axialabstützung (31) aufweist, wobei sich die Anschlagfläche (34) senkrecht zu der Axialrichtung (24) erstreckt.

7. Axialkugelgelenk (20) nach Anspruch 4, **dadurch gekennzeichnet, dass** zwischen der Axialabstützung (31) und der Kunststofflagerschale (29) ein in Axialrichtung (24) wirkendes Federelement, insbesondere ein umlaufender Elastomerring (35), angeordnet ist.

8. Axialkugelgelenk (20) nach einem der vorhergehenden Ansprüche, **dadurch gekennzeichnet, dass** die Gelenkkugel (22) in einem Anlagebereich (37) des Gehäuses (21) unmittelbar an dem Gehäuse (21) anliegt.

9. Axialkugelgelenk (20) nach Anspruch 8, **dadurch gekennzeichnet, dass** der Anlagebereich (37) oberflächengehärtet, insbesondere induktionsgehärtet, ausgebildet ist.

10. Axialkugelgelenk (20) nach einem der vorhergehenden Ansprüche, **dadurch gekennzeichnet, dass** in einem Gehäuseinnenraum (38) eine Schließkraftaufnahme (39) nach Art einer säulenförmigen Ausnehmung ausgebildet ist, wobei die Schließkraftaufnahme (39) zugleich eine Öffnung des Gehäuses (21) bildet.

11. Axialkugelgelenk (20) nach Anspruch 10, **dadurch gekennzeichnet, dass** die Schließkraftaufnahme (39) rotationssymmetrisch ausgebildet ist und eine Rotationsachse aufweist, die sich mit einer Mittelachse (40) des nicht ausgelenkten Kugelzapfens (23) deckt.

12. Axialkugelgelenk (20) nach Anspruch 10 oder 11, **dadurch gekennzeichnet, dass** die Schließkraftaufnahme (39) eine umlaufende Axialanlagefläche (42) aufweist, welche sich senkrecht zu der Axialrichtung (24) erstreckt und in Axialrichtung (24) freiliegt.

13. Axialkugelgelenk (20) nach Anspruch 12, **dadurch gekennzeichnet, dass** die Axialanlagefläche (42) bei einer Projektion in Axialrichtung (24) teilweise außerhalb der Gelenkkugel (22) liegt.

14. Axialkugelgelenk (20) nach einem der Ansprüche 10 bis 13, **dadurch gekennzeichnet, dass** die Schließkraftaufnahme (39) eine umlaufende Radialzentrierfläche (43) aufweist, welche als eine Zylindermantelfläche ausgebildet ist, deren Rotationsachse sich in der Axialrichtung (24) erstreckt.

15. Axialkugelgelenk (20) nach Anspruch 3, **dadurch gekennzeichnet, dass** der Kugelzapfen (23) mit einem Außengewinde (44) ausgestaltet ist, dessen Gewindelänge in Axialrichtung (24) größer ist als die Gewindelänge des Befestigungsgewindes (27) des Anschlusszapfens (25).

16. Axialkugelgelenk (20) nach einem der vorhergehenden Ansprüche, **dadurch gekennzeichnet, dass** die Mitnahmegeometrie (45) durch zumindest zwei parallel beabstandete Schlüsselflächen (45) gebildet ist.

17. Längeneinstellbarer Zweipunktlenker (59), insbesondere für ein Nutzfahrzeug, **dadurch gekennzeichnet, dass** der Zweipunktlenker (59) zwei Winkelgelenke (20, 60) aufweist, die über ein Verbindungselement, insbesondere ein Verbindungsrohr (61), miteinander verbunden sind, wobei ein Winkelgelenk als ein Axialkugelgelenk (20) nach einem der Ansprüche 1 bis 16 ausgebildet sowie längeneinstellbar an das Verbindungselement (61) angebunden ist und das andere Winkelgelenk als ein Radialkugelgelenk (60) ausgebildet sowie starr an das Verbindungselement (61) angebunden ist.

18. Längeneinstellbarer Zweipunktlenker (59) nach Anspruch 17, **dadurch gekennzeichnet, dass** der Zweipunktlenker als Lenkstange, Spurstange (59), Stabilisator-Verbindungsstange, Bediengestänge oder Panhardstab ausgebildet ist.

## Claims

1. Axial ball joint (20) for a length-adjustable two-point link (59), the axial ball joint (20) having a housing (21) and a ball pin (23) with a joint ball (22) rotatably and pivotably mounted in the housing (21)), which, in the non-deflected state, extends out of the housing (21) in an axial direction (24), wherein the ball pin (23) is, inter alia, rotatably mounted in the housing (21) and can be attached in a length-adjustable manner via a threaded connection to a connection component, wherein the ball pin (23) has on its outer circumference a driver geometry (45), and wherein the housing (21) has a connection pin (25) connected in one piece to the latter, which extends at least substantially at right angles to the axial direction (24), **characterized in that** the housing (21) is closed at one axial end by an axial support (31), which is formed as a rotary part or as a rotationally symmetrical extruded part with a thickness varying in the axial direction (24).

2. Axial ball joint (20) according to Claim 1, **characterized in that** the connection pin (25) has a conical section (26).

3. Axial ball joint (20) according to Claim 1 or 2, **characterized in that** the connection pin (25) has a fastening thread (27) at its free end and at the front end has a driver geometry formed as an internal contour, in particular an internal hexagon geometry (28) or internal Torx geometry.

4. Axial ball joint (20) according to one of the preceding claims, **characterized in that** a plastic bearing shell (29), which encloses the joint ball (22) in contact with less than half thereof, is arranged in the housing (21).

5. Axial ball joint (20) according to one of the preceding claims, **characterized in that** the axial support (31) and the housing (21) have a common contact surface (32), which is formed in the manner of a truncated conical surface.

6. Axial ball joint (20) according to one of the preceding claims, **characterized in that** the housing (21) has on its inside a stop surface (34) formed as an annular surface for the axial support (31), wherein the stop surface (34) extends at right angles to the axial direction (24).

7. Axial ball joint (20) according to Claim 4, **characterized in that** a spring element acting in the axial direction (24), in particular a circumferential elastomer ring (35), is arranged between the axial support (31) and the plastic bearing shell (29).

8. Axial ball joint (20) according to one of the preceding claims, **characterized in that** the joint ball (22) bears directly on the housing (21) in a contact area (37) of the housing (21).

9. Axial ball joint (20) according to Claim 8, **characterized in that** the contact area (37) is surface-hardened, in particular induction-hardened.

10. Axial ball joint (20) according to one of the preceding claims, **characterized in that** a closing force receiving means (39) in the manner of a columnar recess is formed in a housing interior, wherein the closing force receiving means (39) simultaneously forms an opening of the housing (21) .

11. Axial ball joint (20) according to Claim 10, **characterized in that** the closing force receiving means (39) is rotationally symmetrical and has an axis of rotation which coincides with a central axis (40) of the non-deflected ball pin (23).

12. Axial ball joint (20) according to Claim 10 or 11, **characterized in that** the closing force receiving means (39) has a circumferential axial contact surface (42), which extends at right angles to the axial direction (24) and is exposed in the axial direction (24).

13. Axial ball joint (20) according to Claim 12, **characterized in that** the axial contact surface (42) is located partly outside the joint ball (22) in a projection in the axial direction (24).

14. Axial ball joint (20) according to one of Claims 10 to 13, **characterized in that** the closing force receiving means (39) has a circumferential radial centring surface (43), which is formed as a lateral cylinder surface, of which the axis of rotation extends in the axial direction (24).

15. Axial ball joint (20) according to Claim 3, **characterized in that** the ball pin (23) is equipped with an external thread (44), of which the thread length is greater in the axial direction (24) than the thread length of the fixing thread (27) of the connection pin (25).

16. Axial ball joint (20) according to one of the preceding claims, **characterized in that** the driver geometry (45) is formed by at least two parallel-spaced wrench flats (45).

17. Length-adjustable two-point link (59), in particular for a utility vehicle, **characterized in that** the two-point link (59) has two angled joints (20, 60) which are connected to each other via a connecting element, in particular a connecting tube (61), wherein one angled joint is formed as an axial ball joint (20) according to one of Claims 1 to 16 and is attached to the connecting element (61) in a length-adjustable manner, and the other angled joint is formed as a radial ball joint (60) and is attached rigidly to the connecting element (61).

18. Length-adjustable two-point link (59) according to Claim 17, **characterized in that** the two-point link is formed as a steering rod, track rod (59), stabilizer connecting rod, operating linkage or Panhard rod.

## Revendications

1. Articulation sphérique axiale (20) destinée à une bielle à deux points (59) réglable en longueur, l'articulation sphérique axiale (20) comprenant un boîtier (21) et un pivot sphérique (23) dont la sphère d'articulation (22) est logée de manière rotative et pivotante dans le boîtier (21) et qui s'étend, dans un état non déployé, hors du boîtier (21) dans une direction axiale (24), la sphère d'articulation (23) étant logée entre autres de manière rotative dans le boîtier (21) et pouvant être reliée à un composant de raccordement de manière variable en longueur par le biais d'une liaison filetée, le pivot sphérique (23) ayant une géométrie d'entraînement (45) sur sa circonférence extérieure et le boîtier (21) comportant un pivot de raccordement (25) qui est relié d'une seule pièce à celui-ci et qui s'étend au moins sensiblement perpendiculairement à la direction axiale (24), **caractérisée en ce que** le boîtier (21) est fermé à une extrémité axiale par un support axial (31) qui est conçu comme une pièce rotative ou comme une pièce extrudée à symétrie de révolution présentant une épaisseur variable dans la direction axiale (24).

2. Articulation sphérique axiale (20) selon la revendication 1, **caractérisée en ce que** le pivot de raccordement (25) comporte une portion conique (26).

3. Articulation sphérique axiale (20) selon la revendication 1 ou 2, **caractérisée en ce que** le pivot de raccordement (25) comporte à son extrémité libre un filetage de fixation (27) et présente du côté frontal une géométrie d'entraînement conçue comme un contour intérieur, notamment une géométrie à six pans creux (28) ou une géométrie hexalobulaire interne.

4. Articulation sphérique axiale (20) selon l'une des revendications précédentes, **caractérisée en ce qu'**une coque de palier en matière synthétique (29), qui entoure la sphère d'articulation (22) en appui sur moins de la moitié de celle-ci, est disposée dans le boîtier (21).

5. Articulation sphérique axiale (20) selon l'une des revendications précédentes, **caractérisée en ce que** le support axial (31) et le boîtier (21) comportent une surface de contact commune (32) qui est conçue à la manière d'une surface d'enveloppe tronconique.

6. Articulation sphérique axiale (20) selon l'une des revendications précédentes, **caractérisée en ce que** le boîtier (21) comporte à l'intérieur une surface de butée (34) conçue comme une surface annulaire et destinée au support axial (31), la surface de butée (34) s'étendant perpendiculairement à la direction axiale (24).

7. Articulation sphérique axiale (20) selon la revendication 4, **caractérisée en ce qu'**un élément à ressort agissant dans la direction axiale (24), notamment une bague élastomère périphérique (35), est disposé entre le support axial (31) et la coque en matière synthétique (29).

8. Articulation sphérique axiale (20) selon l'une des revendications précédentes, **caractérisée en ce que** la sphère d'articulation (22) vient directement en appui sur le boîtier (21) dans une zone d'appui (37) du boîtier (21).

9. Articulation sphérique axiale (20) selon la revendication 8, **caractérisée en ce que** la zone d'appui (37) est durcie en surface, notamment durcie par induction.

10. Articulation sphérique axiale (20) selon l'une des revendications précédentes, **caractérisée en ce qu'**un moyen de réception de force de fermeture (39) est conçu dans un espace intérieur de boîtier (38) à la manière d'un évidement en forme de colonne, le moyen de réception de force de fermeture (39) formant en même temps une ouverture du boîtier (21).

11. Articulation sphérique axiale (20) selon la revendication 10, **caractérisée en ce que** le moyen de réception de force de fermeture (39) est à symétrie de révolution et comporte un axe de rotation confondu avec un axe central (40) du pivot sphérique (23) non déployé.

12. Articulation sphérique axiale (20) selon la revendication 10 ou 11, **caractérisée en ce que** le moyen de réception de force de fermeture (39) comporte une surface d'appui axiale périphérique (42) qui s'étend perpendiculairement à la direction axiale (24) et qui est dégagée dans la direction axiale (24).

13. Articulation sphérique axiale (20) selon la revendication 12, **caractérisée en ce que** la surface d'appui axiale (42) est située partiellement à l'extérieur de la sphère d'articulation (22) lors d'une projection dans la direction axiale (24).

14. Articulation sphérique axiale (20) selon l'une des revendications 10 à 13, **caractérisée en ce que** le moyen de réception de force de fermeture (39) comporte une surface de centrage radiale périphérique (43) qui est conçue comme une surface d'enveloppe de cylindre dont l'axe de rotation s'étend dans la direction axiale (24) .

15. Articulation sphérique axiale (20) selon la revendication 3, **caractérisée en ce que** le pivot sphérique (23) est conçu avec un filetage extérieur (44) dont la longueur dans la direction axiale (24) est supérieure à la longueur du filetage de fixation (27) du pivot de raccordement (25).

16. Articulation sphérique axiale (20) selon l'une des revendications précédentes, **caractérisée en ce que** la géométrie d'entraînement (45) est formée par au moins deux surfaces de clé (45) espacées parallèlement l'une de l'autre.

17. Bielle à deux points (59) réglable en longueur, destinée en particulier à un véhicule utilitaire, **caractérisée en ce que** la bielle à deux points (59) comporte deux articulations d'angle (20, 60) qui sont reliées l'une à l'autre par un élément de liaison, notamment un tube de liaison (61),
une articulation d'angle étant conçue comme une articulation sphérique axiale (20) selon l'une des revendications 1 à 16 et étant reliée à l'élément de liaison (61) de manière réglable en longueur et l'autre articulation d'angle étant conçue comme une articulation sphérique radiale (60) et étant reliée rigidement à l'élément de liaison (61).

18. Bielle à deux points (59) réglable en longueur selon la revendication 17, **caractérisée en ce que** la bielle à deux points est conçue comme une bielle de direction, une bielle d'accouplement (59), une bielle de liaison de stabilisateur, une tringlerie de commande ou une barre Panhard.
